# EUROPÄISCHE PATENTSCHRIFT

(11) **EP 1 918 125 B1**
(45) Veröffentlichungstag und Bekanntmachung des Hinweises auf die Patenterteilung: **22.01.2014**
(21) Anmeldenummer: 07019599.5
(22) Anmeldetag: 08.10.2007
(51) Int. Cl.: B44B 5/02, A44C 21/00, G03H 1/02

(54) **Prägeeinrichtung und Verfahren zur Herstellung eines Prägewerkzeugs**
Embossing device and method for the production of an embossing tool
Dispositif d'estampage et procédé de fabrication d'un outil d'estampage

(30) Priorität: 06.11.2006 DE 102006052511
(43) Veröffentlichungstag der Anmeldung: 07.05.2008
(73) Patentinhaber: Schuler Pressen GmbH, 73033 Göppingen (DE)
(72) Erfinder: Betting, Magnus, 73033 Göppingen (DE); Klein-Wiele, Jan-Hendrik, 37085 Göttingen (DE); Stolz, Jürgen, 14624 Dallgow (DE); Erbe, Martin, 70469 Stuttgart (DE); Nürbauer, Alfred, 85630 Neukeferloh (DE)
(74) Vertreter: Rüger, Barthelt & Abel

(56) Entgegenhaltungen:
- EP-A1- 0 421 181
- WO-A1-2004/045866
- WO-A2-2005/077674
- DE-A1- 4 314 410
- DE-A1- 10 002 644
- DE-A1- 19 722 575
- DE-A1- 19 741 998
- US-A- 5 327 825
- US-A- 5 479 853

## Beschreibung

Die Erfindung betrifft eine Vorrichtung und ein Verfahren zum Erzeugen von lichtbeugenden Strukturen an Werkstücken durch Prägen.

Zur Erzielung farbiger optischer Effekte, wie z.B. Hologramme auf Metalloberflächen, beispielsweise an Münzen, ist es bekannt, die Oberfläche der betreffenden Gegenstände an den gewünschten Stellen mit einer beugungsaktiven Oberflächenstruktur zu versehen. Diese erzeugt Lichtinterferenzen, die den gewünschten optischen Effekt hervorrufen. Beugungsaktive Oberflächen erfüllen dabei nicht nur dekorative Zwecke, sondern können auch dem Schutz vor Fälschung dienen. Die optische Wirkung beruht dabei auf sehr feinen, reliefartig in die jeweilige Oberfläche eingebrachten periodisch aufgebauten Gitterstrukturen. Bekanntestes Beispiel sind metallisierte Kunststofffolien mit Hologrammen, wie sie auf Scheckkarten und Geldscheinen und z.B. bei Klebesiegeln zum Einsatz kommen. Während eine glatte Oberfläche einfallendes Licht reflektiert, d.h. unter einem mit dem Einfallswinkel übereinstimmenden Ausfallswinkel wieder abstrahlt, kommt es an Beugungsgittern zu einer Winkeländerung, die z.B. als Farbumschlageffekt an Hologramm-Folien beobachtet werden kann. Die Herstellung beugungsaktiver Folien beruht auf dem Prägen thermoplastischer Kunststoffe mittels galvanisch geformter Nickelstempel und anschließendem Metallisieren der Gitteroberfläche. Daneben existieren jedoch bereits verschiedene Verfahren, mit denen Beugungsgitter unmittelbar in Obeflächen metallischer Körper eingebracht werden.

Dazu ist beispielsweise aus der WO 2004/045866 A1 die Erzeugung solcher Oberflächenstrukturen in Metalloberflächen mittels eines Prägestempels bekannt. Dieser weist Gitter-und/oder Linienstrukturen auf, die sich beim Prägen des Werkstücks an diesem abformen. Dabei wird der Prägestempel durch einen monokristallinen Diamant gebildet, der mittels Kobalt mit einem Trägerkörper verlötet ist. Die Negativstruktur des an dem Werkstück später zu erzeugenden Beugungsgitters wird in den Prägestempel mittels eines Lasers eingearbeitet. Außerdem kann der Prägestempel mit einem Elektronen- oder einem Röntgenstrahl poliert werden.

Bei dieser Vorgehensweise ist die Größe der zu erzeugenden interferenzwirksamen Strukturen von vornherein auf die Größe vorhandener Diamanten begrenzt.

Des Weiteren offenbart die DE 100 02 644 A1 die Herstellung beugungswirksamer Reliefstrukturen auf Münzoberflächen. Dazu wird der betreffende Rohling zunächst in einem Tauchbad mit einer dünnen lichtempfindlichen Kunststoffschicht überzogen. Anschließend wird die Kunststoffschicht belichtet und entwickelt. Dadurch werden mikroskopisch feine Stellen der Münzoberfläche frei gelegt. In einem Ätzbad können dann nachfolgend mikroskopische Reliefstrukturen in die Münzoberfläche eingeätzt werden, wonach der fotoempfindliche Kunststoff wieder entfernt wird. Die DE 100 02 644 A1 offenbart darüber hinaus ein Konzept für eine fälschungssichere Münze mit beugungsoptischen, die herkömmlichen Gestaltungselemente einer Münze ergänzenden Merkmalen. Diese sollen visuell erkennbar, aber auch maschinenlesbar sein, wobei die maschinelle Erkennung der beugungsoptischen Signatur auf der Feststellung der räumlichen Lage der Beugungsmaxima beruht. Es wird ein Lesegerät vorgestellt, welches in Münzprüfer und ähnliche Geräte eingebaut ist. Kernstück dieses Lesegeräts ist eine Lichtquelle und eine darauf abgestimmt Sensorik, mit der unter anderem festgestellt wird, ob die Beugungsmaxima des von der Signatur auf der Münze abgestrahlten Lichts an der aufgrund der Wellenlänge des Lichts und der Gitterparameter der Struktur zu erwartenden Stelle auftreten.

Weiter ist aus der DE 197 22 575 A1 die Herstellung von interferenzfähigen Mikrostrukturen, beispielsweise zur Erzeugung von Hologrammen in Münzen mittels Prägestempel, bekannt. Bei diesem Verfahren werden auf einem Prägestempel mehrere harte Schichten, beispielsweise aus Kobalt-oder Nickellegierungen abgeschieden, in die Diamantkristalle eingelagert sind. Die Schichten können durch spezielle Legierungsbäder oder Metallspritzverfahren, durch galvanische Abscheidung oder durch plasmatische Ablagerung aufgebracht sein. Die Oberflächenschicht wird durch eine diamantähnliche Schicht gebildet, die die Mikrostruktur enthält. Zur Erzeugung der Mikrostrukturen verweist die genannte Schrift allgemein auf galvanische Verfahren, Elektronen- oder Lasergravur, Feinätztechniken und direkte Gravur mittels Diamantwerkzeug.

Aus EP 0 421 181 A1 ist eine Prägeeinrichtung zur Bearbeitung von Gegenständen bekannt, die einen Mikroprägestempel aufweist. Der Mikroprägestempel weist einen Stempelkörper mit einer zumindest an einer dem Gegenstand zugewandten Seite aufgebrachten Hartstoffschicht auf, die ein Prägerelief zur Erzeugung beugungsaktiver Prägestellen an dem Metallgegenstand aufweist.

Ein Verfahren zur Herstellung eines holografischen Musters ist aus US 5 372 825 bekannt. Es geht dort um die Erzeugung einer nahtlosen Prägefläche auf einer zylindrischen Walze, mittels der das Muster in eine Folie eingeprägt werden kann. Auf die Walze wird erforderlichenfalls eine prägbare Materialschicht, beispielsweise aus Silber, aufgebracht. Diese Schicht wird gereinigt und geätzt und anschließend werden die Mikrostrukturen mithilfe eines konkaven Stempels eingebracht. Danach kann die Oberfläche poliert oder beschichtet werden.

DE 197 41 998 A1 beschreibt die Möglichkeit durch Lasergravur hologrammartige Abbildungen an einem Prägewerkzeug anzubringen.

Ausgehend von diesem Stand der Technik ist es Aufgabe der Erfindung, ein praktisch prägestempeltaugliches Verfahren und eine entsprechende Vorrichtung zur prägetechnischen Erzeugung von Beugungsstrukturen von auf Metalloberflächen zu schaffen. Weiterhin ist es Aufgabe der Erfindung, eine praktisch einsetzbare, kostengünstige Produktionstechnik für in Metall geprägte Diffraktogramme zum Einsatz in der Massenfertigung von Umlaufmünzen und Token bzw. Wertmarken, aber auch für die Herstellung z.B. von Sondermünzen und Medaillen anzugeben.

Diese Aufgabe wird mit den Merkmalen des Anspruchs 1 wie auch den Merkmalen des Anspruchs 16 gelöst.

Die erfindungsgemäße Prägeeinrichtung enthält ein Prägewerkzeug mit einem in das Prägewerkzeug eingesetzten Stempelkörper, auf den unmittelbar eine Hartstoffschicht aufgebracht ist. Die Hartstoffschicht und der Stempelkörper bilden eine Einheit, wobei die Hartstoffschicht lediglich eine dünne flächige Auflage auf der Oberfläche des Stempelkörpers darstellt. In die Hartstoffschicht ist das gewünschte Prägerelief durch Ablation eingebracht, nachdem die Hartstoffschicht auf den Stempelkörper aufgebracht worden ist. Dies stellt einerseits ein einfach durchführbares Verfahren zur Herstellung der Mikrostrukturen in Form des Prägereliefs dar und stellt andererseits deren Formhaltigkeit auch dann sicher, wenn die Hartstoffschicht relativ dünn ist.

Ein wesentlicher Aspekt der Erfindung ist der Mikroprägestempel, dessen Grundkörper aus einem hochfesten harten Trägermaterial wie z.B. Hartmetall besteht. Die spätere Bildfläche des Prägestempels weist abgerundete Kanten auf, wodurch beim Prägen Kantenspannungen in der Kontaktzone gemindert und die in der Fläche wirkenden Druckspannungen homogenisiert werden, so dass sich ein gleichmäßiges ebenes Prägebild ergibt. Der Grundkörper wird vorzugsweise durch ein plasma-aktiviertes CVD-Verfahren mit einer z.B. ca. 2 µm dicken, hochelastischen amorphen Schicht aus Kohlenstoff umhüllt. Diese unter der Bezeichnung DLC bekannte Schicht ist, anders als von Korngrenzen durchzogener Stahl, praktisch homogen. Sie ist annähernd so hart wie Diamant, aber ohne dessen Sprödheit und Empfindlichkeit gegenüber Punktbelastung. Sie hat nach außen eine verringerte Adhäsionsneigung, was Prägestempelverschleiß mindert und die Reinigung des Prägestempels erleichtert. Eine beugungsoptische Reliefstruktur kann mittels Laserablation eingebracht werden, wonach unmittelbar, ohne Zwischenschritte zur Härtesteigerung, der fertige Mikroprägestempel zur Verfügung steht. Die Tiefe der Reliefstruktur ist dabei vorzugsweise wesentlich geringer als die Dicke der Hartschicht. Beschränkungen hinsichtlich der Prägestempelgröße ergeben sich lediglich durch das Aufnahmevermögen der zur Beschichtung eingesetzten Anlagen.

Die durch Laserablation der DLC-Schicht erzeugte Gitterstruktur ist äußerst präzise und scharfkantig ausgeformt. Metallische Oberflächen dagegen zeigen eine geringere Qualität, was auf das Aufschmelzen des Metalls zurückzuführen ist. Ein Vorteil der erfindungsgemäßen Mikroprägestempel liegt in der einfachen Herstellung ohne Zwischenschritte und unter Verwendung gängiger Materialien und Verfahren.

Das Prägewerkzeug ist vorzugsweise zur Kaltverformung des Metallgegenstands, beispielsweise eines Münzrohlings, eingerichtet. Es ist jedoch alternativ auch möglich, den Prägevorgang an vorgewärmten Rohlingen durchzuführen. Dazu kann der Prägeeinrichtung beispielsweise eine Vorwärmeinrichtung für Münzrohlinge zugeordnet sein.

Die das Prägerelief bildenden Vertiefungen können punkt- oder linienartige Vertiefungen einheitlicher oder unterschiedlicher Tiefe sein. Sie können außerdem eine einheitliche oder eine unterschiedliche Breite aufweisen. Die Flanken dieser Vertiefungen sind parallel zueinander oder in einem Winkel, beispielsweise in einem spitzen Winkel, zueinander orientiert. Außerdem sind die in die Hartstoffschicht und den Mikroprägestempel eingebrachten Vertiefungen vorzugsweise scharfkantig ausgebildet.

Als Hartstoffschicht eignen sich sowohl metallische als auch nichtmetallische Hartstoffschichten. Die Hartstoffschichten bestehen z.B. aus zumindest zwei chemischen Elementen. Wie erwähnt werden aber vorzugsweise Diamantschichten oder diamantähnliche Schichten verwendet. Unter metallischen Hartstoffschichten werden Hartstoffschichten mit vorwiegend metallischer Bindung verstanden, wie beispielsweise TiN, TiCN, TiC, TiAlCON, TiBN, wobei die einzelnen Elemente der genannten Verbindungen in verschiedenen Verhältnissen zueinander vorkommen können. An Stelle von Titan kann ganz oder teilweise auch Hafnium oder Zirkon Anwendung finden. Unter nichtmetallischen Hartstoffschichten werden Hartstoffschichten mit vorwiegend kovalenter Bindung verstanden, wie beispielsweise Al₂O₃ oder Diamantschichten.

Ein Vorteil der Aufbringung einer Hartstoffschicht auf einen Stempelkörper und die nachfolgende Einbringung des Prägereliefs ist, dass die Interferenzstrukturen sehr klar, scharf bzw. tief zur Verfügung stehen und nicht durch eine nachfolgend aufgetragene Schicht zugedeckt werden.

Die Erfindung sieht ein Prägestempel-in-Stempel-Verfahren vor, bei dem ein kleinerer, das Negativrelief des Beugungsgitters tragender Zusatzstempel in einen größeren herkömmlichen Prägestempel (Hauptstempel) herausnehmbar eingelassen ist. Wegen des unterschiedlichen Verformungsverhaltens von Hauptstempel und Zusatzstempel bzw. Stützstift ist es zweckmäßig, den Zusatzstempel um wenige Zehntel Millimeter über die Oberfläche des Hauptstempels hinaus stehen zu lassen. Dieses Verfahren ermöglicht a) den unabhängigen Austausch des Zusatzstempels bei Verschleiss oder Verschmutzung, b) die Verwendung unterschiedlicher Werkstoffe, Oberflächenbehandlungen und Beschichtungen für Haupt- und Zusatzstempel und c) das Prägen von Münzen, Medaillen, Token mittels herkömmlicher Münzpräge-, Medaillen- oder Einsenkpressen.

Darüberhinaus löst die Erfindung ein fertigungstechnisches Kernproblem, das beim Prägen von Beugungsstrukturen in Metalle auftritt. Es besteht darin, dass sich auf den feinen Gitterstrukturen im Mikroprägestempel schon nach wenigen Abprägungen eine Plaque aus Metallabrieb, Oxiden, Staubpartikeln, Schmiermitteln bildet. Diese Plaque behindert das Abprägen des Mikroprägestempel-Reliefs. Eine Vermeidung der Verschmutzung im Prägebetrieb bei der konventionellen Münz- und Medaillenfertigung ist nicht vollständig möglich. Dazu schafft die Erfindung ein effizientes Verfahren zur laufenden automatischen Reinigen der Mikroprägestempel und ermöglicht die Massen- oder Serienfertigung von Münzen.

Die Erfindung sieht insbesondere zwei integrierte Verfahren zur Reinigung der Diffraktogramm-Mikroprägestempel vor. Zum einen ist dies die Reinigung mittels Trockeneisstrahlen. Dabei wird festes Kohlendioxid in gemahlener bzw. körniger Form mittels Druckluft auf die zu reinigenden Prägestempeloberflächen geblasen. Die Reinigungswirkung ergibt sich durch die kinetische Energie der Trockeneispartikel, durch das Verspröden der Plaques unter Kälteeinfluss, aber auch durch die schlagartige Volumenzunahme beim Kohlendioxid, das bei Aufprall sublimiert und so die Plaqueschicht gewissermaßen sprengt. Das Reinigungsmedium Kohlendioxid entweicht als Gas, die Reste der Plaqueschicht werden dadurch mit entfernt. Vorzugsweise findet dieser Reinigungsvorgang in einer entsprechend modifizierten Münz- oder Medaillenprägemaschine bei laufendem Prägebetrieb statt.

Eine Ausführungsform der Erfindung besteht darin, dass in Bauteile der Prägemaschine Strahldüsen eingearbeitet sind und eine Synchronisation des Strahlvorgangs mit dem Arbeitstakt der Maschine von der Maschinensteuerung vorgenommen wird. Ein weiterer erfindungsgemäßer Reinigungsmechanismus zur Unterstützung des Trockeneisstrahlens besteht in der Verwendung entsprechend modifizierter Zubringersegmente in einer Prägemaschine mit Revolverzuführung. Die Zubringersegmente dienen der Zuführung der ungeprägten Rohlinge zur Prägestation und übernehmen gleichermaßen den Abtransport der fertig geprägten Münze. Rohlinge und Münzen bewegen sich dabei schrittweise auf einer Kreisbahn. Bei jedem Öffnen der Prägestation durchlaufen die Zubringersegmente den Zwischenraum zwischen den beiden Prägestempeln. Werden die Segmente mit Einsätzen z.B. aus Borsten oder Filz versehen, streichen sie bei jeder Transportbewegung an den Prägestempeln entlang und tragen so die Plaqueschicht teilweise ab. Die Bestückung der Zubringersegmente mit Reinigungseinsätzen muss durch Modifikationen an der Prägemaschine begleitet werden, durch die Platz für die Bewegung der Reinigungseinsätze geschaffen wird.

Des Weiteren kann nach einer weiteren Ausführungsform der Erfindung der Einsatz von Sensorik zur Steuerung der Produktionsabläufe beim Prägen vorgesehen werden. Es ist damit eine laufende Gut/Schlecht-Prüfung möglich. Verschmutzungen der Diffraktogramm-Mikroprägestempel sind schnell erkennbar. Zum anderen kann die in die Prägemaschine integrierte Sensorik der Feststellung des Lebensdauerendes der Diffraktogramm-Mikroprägestempel dienen. Aufgabe der Sensorik ist dann die Feststellung, ob eine soeben geprägte Münze die gewünschte Beugungsstruktur aufweist und ob die Beugungswirkung noch in hinreichendem Maße gegeben ist.

Weitere Einzelheiten von vorteilhaften Ausführungsformen der Erfindung ergeben sich aus der Zeichnung, der Beschreibung oder Ansprüchen. Die Beschreibung zeigt wesentliche Merkmale der Erfindung und sonstiger Gegebenheiten. Weitere Einzelheiten entnimmt der Fachmann in gewohnter Weise der Zeichnung.

Es zeigen:
Figur 1 eine Prägeeinrichtung einer Münzprägepresse in schematisierter, längs geschnittener Darstellung,
Figur 2 einen Mikroprägestempel für die Prägeeinrichtung nach Figur 1 in vergrößerter schematisierter Schnittdarstellung,
Figur 3 eine Zubringeinrichtung mit Reinigungsbürste für die Prägeeinrichtung nach Figur 1 in vergrößerter schematisierter Darstellung,
Figur 4 einen Stempelkörper vor Aufbringung der Hartstoffschicht in schematisierter Darstellung,
Figur 5 den Stempelkörper nach Aufbringen der Hartstoffschicht vor Einbringen des Prägereliefs in schematisierter Darstellung und
Figur 6 den Stempelkörper mit Hartstoffschicht während der Erzeugung des Prägereliefs durch Ablation in schematisierter Darstellung.

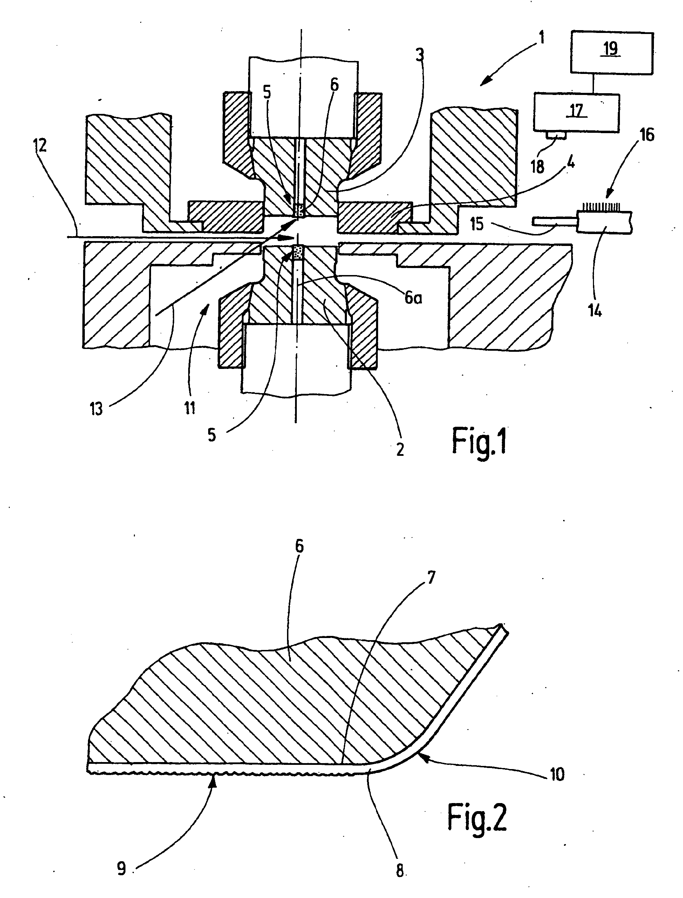

In Figur 1 ist eine Prägeeinrichtung 1 zum Prägen von Münzen in schematisierter Darstellung veranschaulicht. Zu der Prägeeinrichtung 1 gehören ein unterer Prägestempel 2 und ein zugeordneter oberer Prägestempel 3. Der obere Prägestempel 3 ist in einem Prägering 4 angeordnet. Die Prägestempel 2, 3 sind mit einem nicht weiter veranschaulichten Negativprofil versehen, das beim Prägen einer Münze an deren Oberfläche abgeformt wird. Die Prägestempel 2, 3 bilden somit gegebenenfalls mit dem Prägering 4 jeweils ein Prägewerkzeug.

Die Prägestempel 2, 3 können ein oder mehrere Mikroprägestempel 5 aufweisen, die zur Erzeugung einer fein strukturierten Oberfläche an dem Metallgegenstand, im vorliegenden Fall dem Münzrohling dienen. Die Oberflächenstrukturierung soll dabei so fein sein, dass an der fertig geprägten Münze Beugungs- oder Interferenzerscheinungen auftreten, die zu Farbeffekten oder auch zum Entstehen von Weißlichthologrammen führen.

Der Mikroprägestempel 5 weist eine Stirnseite auf, die vorzugsweise bündig zu der sonstigen Gravur des Prägewerkzeugs, im vorliegenden Beispiel des Prägestempels 3 angeordnet ist. Der Mikroprägestempel 5 ist vorzugsweise auswechselbar in einer entsprechenden Ausnehmung des Prägewerkzeugs, d.h. des Prägestempels 2, 3, gehalten. Dies hat den Vorzug, dass er bei Verschleiß gewechselt werden kann, wobei der Prägestempel 2, 3 weiter verwendet werden kann. Der Mikroprägestempel 5 ist in einer Bohrung des Prägestempels 2, 3 angeordnet und in dieser mittels eines Stützstifts 6a abgestützt.

Der Mikroprägestempel 5 ist in Figur 2 ausschnittsweise gesondert veranschaulicht. Er besteht aus einem im Querschnitt beispielsweise prismatischen oder zylindrischen Stempelkörper 6, der an einer unprofilierten, vorzugsweise ebenen Fläche, beispielsweise seiner Stirnfläche 7, mit einer Hartstoffauflage 8 versehen ist. Die Hartstoffauflage 8 kann sich, wie dargestellt, auf die Stirnfläche 7 beschränken oder alternativ einen größeren Bereich der Oberfläche des Mikroprägestempels 5 einnehmen. Die Hartstoffauflage 8 folgt dabei der Form der Stirnfläche 7. Ist die Stirnfläche 7 eben, so ist auch die Hartstoffschicht 8 eben. Hat die Stirnfläche 7 eine vorgegebene Grundform, wie beispielsweise eine konvexe oder konkave ballige Form, folgt die Hartstoffschicht 8 dieser Form. Die Hartstoffschicht wird vorzugsweise in einem plasma-aktivierten CVD-Verfahren z.B. in Form einer ca. 2 µm dicke amorphen Kohlenstoffschicht hergestellt. Diese unter der Bezeichnung DLC bekannte Schicht ist praktisch homogen und wenig spröde.

Die Hartstoffschicht 8 kann aber beispielsweise auch eine andere, z.B. eine metallische Hartstoffschicht, z.B. eine TiN-oder eine TiAlCNO-Schicht, oder eine nichtmetallische Hartstoffschicht wie beispielsweise eine Al₂O₃-Schicht sein. Die Hartstoffschicht 8 kann dabei aus einem einzigen Material durchgehend gleicher Struktur bestehen. Es ist jedoch auch möglich, einen Mehrschichtaufbau vorzusehen. Zur Herstellung eignen sich PVD- und/oder CVD-Verfahren.

In die Hartstoffschicht 8 ist ein Mikro-Prägerelief 9 eingebracht, dessen Strukturierung vorzugsweise im Bereich zwischen 0,1 und 1 µm liegt. Das Prägerelief kann aus einzelnen, zueinander parallelen oder im Winkel zueinander verlaufenden, sich kreuzenden Linien oder auch aus Einzelpunkten bestehen, die Vertiefungen bilden. Das Prägerelief ist in Figur 2 symbolisch veranschaulicht. Die Vertiefungen weisen vorzugsweise eine Tiefe auf, die geringer ist als die Dicke der Hartstoffschicht 8. Vorzugsweise liegt die Dicke der Hartstoffschicht 8 im Bereich des Zwei- bis Zehnfachen der Tiefe der Vertiefungen.

Vorzugsweise weist der Mikroprägestempel 5 an seiner Stirnseite 7 gerundete Kanten 10 auf, wodurch beim Prägen Kantenspannungen in der Kontaktzone gemindert und die in der Fläche wirkenden Druckspannungen homogenisiert werden. Es ergibt sich ein gleichmäßiges ebenes Prägebild.

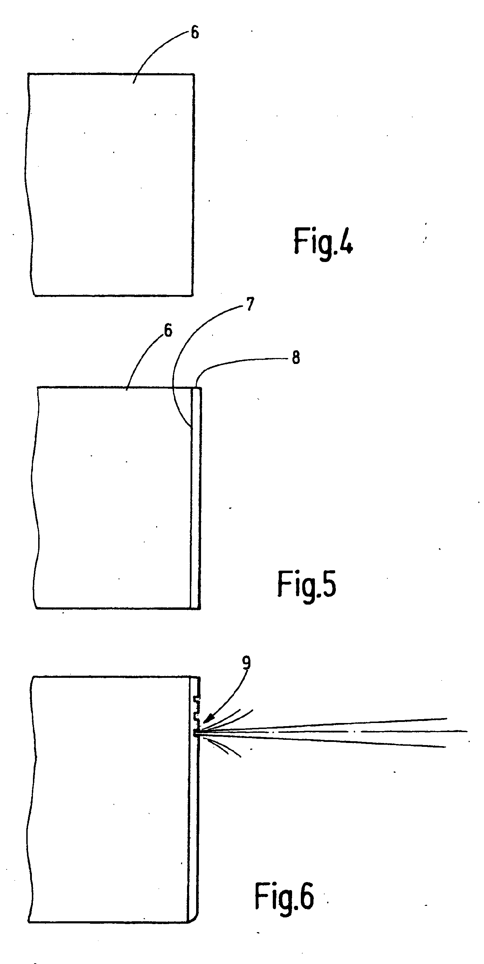

Die Herstellung des Mikroprägestempeles 5 erfolgt gemäß Figur 4 bis 6, indem zunächst ein Stempelkörper 6 bereitgestellt wird. Dieser besteht z.B. aus Hartmetall, das pulvermetallurgisch durch Sintern von Rohlingen aus Wolframkarbidpulver mit Zusätzen von Kobalt hergestellt werden kann. Alternativ können Cermets Anwendung finden. Auch kann der Stempelkörper 6 im Metallspritzgießverfahren hergestellt werden, indem ein Hartmetallpulver (z.B. Wolframkarbid mit Kobalt) mit geringen Anteilen von Kunststoff im Spritzgießverfahren zu gewünschten Körpern geformt und danach gesintert wird. Auf den Stempelkörper 6 wird, wie in Figur 5 veranschaulicht, in einem geeigneten Verfahren, beispielsweise PVD, CVD oder einem verwandten Verfahren, die Hartstoffschicht 8 zunächst als gleichmäßig dicke Schicht von wenigen µm Dicke aufgebracht. Diese entsteht somit unmittelbar auf der Stirnfläche 7 und folgt somit der Form dieser Fläche. Nachfolgend wird in einem Ablationsverfahren, beispielsweise in einem Laserablationsverfahren, das gewünschte Prägerelief 9 in die Hartstoffschicht 8 eingebracht.

Der Mikroprägestempel 5 ist nach Fertigstellung des Prägereliefs 9 einsatzfähig. Er wird in den Prägestempel 3 eingesetzt und kann nun ohne weiteres zum Prägen von kalten oder vorgewärmten Ronden zur Münzherstellung dienen.

Die Prägeeinrichtung 1 ist mit einer in Figur 1 lediglich symbolisch veranschaulichten Reinigungseinrichtung 11 versehen. Diese dient dazu, die Mikroprägestempel 5 in Betrieb sauber zu halten. Die Säuberung der Mikroprägestempel 5 erfolgt dabei vorzugsweise bei offenem Werkzeug, z.B. durch Trockeneisstrahlen 12, 13. Diese werden durch geeignete, nicht weiter veranschaulichte Düsen auf die Stempel 2, 3 dabei insbesondere auf die Prägereliefs der Mikroprägestempel 5 gerichtet. Die Reinigungswirkung ergibt sich durch mechanische Einwirkung der Trockeneispartikel. Auf den Prägereliefs 9 ausgebildete Plaques oder sonstige Ablagerung verspröden durch die Kälteeinwirkung. Das verdampfende Kohlendioxid sprengt dann die Plaqueschicht ab und bläst deren Bruchstücke aus dem Werkzeug 1. Entsprechende Strahldüsen können bedarfsweise an einem beweglichen Träger angeordnet werden, der bei offenem Werkzeug 1 in dieses hinein taucht. Sodann kann der Trockeneisstrahl freigegeben werden. Es ist auch möglich, entsprechende Reinigungsdüsen an anderen bewegten Maschinenteilen, beispielsweise einer Werkstücktransportvorrichtung anzubringen, die ohnehin in das Werkzeug einfahren muss. Des Weiteren ist es möglich, die zu verformenden Werkstücke, beispielsweise Ronden, vor dem Prägen mit Trockeneis zu reinigen, um Fette oder sonstige Bestandteile zu entfernen.

Der Reinigungsvorgang kann nach jedem Prägevorgang erfolgen. Es ist auch möglich, jeweils eine vorbestimmte Anzahl von Prägevorgängen auszuführen, wonach der Reinigungsvorgang dann ausgeführt wird. Des Weiteren ist es möglich, die Reinigung mittels Trockeneisstrahl lediglich bedarfsweise durchzuführen, wenn beispielsweise eine Verschmutzung der Prägestempel durch einen Abfall der Prägequalität festgestellt wird.

Zur Erfassung der Prägequalität kann eine Erfassungseinrichtung dienen, die das von dem Prägerelief erzeugte Prägemuster auf einer erzeugten Münze prüft. Dies kann durch Aufstrahlen von Licht und Untersuchung des sich ergebenden Begungsbilds erfolgen.

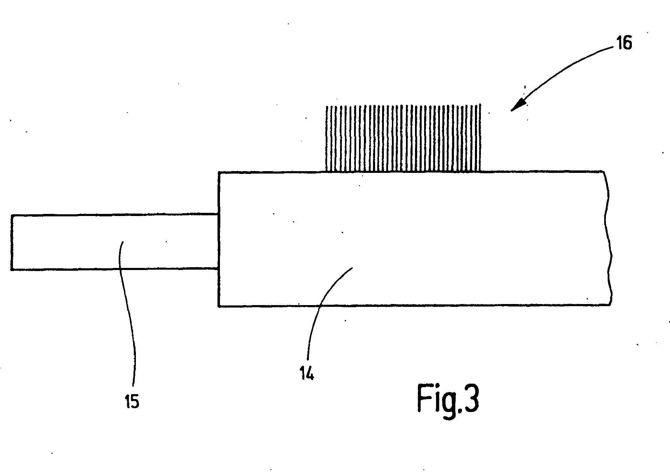

Figur 1 veranschaulicht des Weiteren einen Werkstückgreifer 14 mit Greiferzungen 15, die dazu eingerichtet sind, ein Werkstück aufzunehmen und in die Prägeeinrichtung 1 einzulegen oder aus dieser heraus zu führen. Die Greifereinrichtung 14 kann mit einer Bürste 16 versehen sein, die insbesondere aus Figur 3 hervorgeht. Diese Bürste weist eine Anzahl von Borsten auf, die beim Einlegen des Werkstücks in das Werkzeug und/oder beim Herausführen bei der ohnehin durchzuführenden Transportbewegung oder Dank einer auszuführenden Zusatzbewegung über das Prägerelief 9 des Mikroprägestempels 5 zu streifen und dieses dabei zu reinigen.

Bei einer bevorzugten Ausführungsform ist ein optischer Sensor 17 in das Werkzeug der Prägeeinrichtung 1 integriert oder, wie in Figur 1 veranschaulicht, in der Nähe desselben angeordnet. Von dem Sensor oder einer anderen geeigneten Lichtquelle ausgehendes Licht wird von dem geprägten Gegenstand, z.B. einer frisch geprägten Münze, reflektiert und von dem Sensor 17 beispielsweise mittels eines Objektivs 18 aufgenommen. Zu dem Sensor gehört außerdem eine Auswerteeinrichtung, die das von dem Objektiv 18 aufgenommene Bild des beugungsoptisch aktiven Bereichs auswertet. Dieses Bild kann spezielle Farbstrukturen oder Hell/Dunkel-Strukturen zeigen. Beispielsweise kann die Auswerteeinrichtung Farbverteilung, Bildkontrast und Bildschärfe prüfen. Die gemessenen Werte können an eine Steuereinrichtung 19 gemeldet werden. Diese kann daran beispielsweise die Qualität der hergestellten Münzen verfolgen. Sie kann Qualitätstrends erkennen, bei Annäherung an eine untere Mindestqualitätsgrenze ein Alarmsignal aussenden und bei Unterschreitung der Mindestqualitätsgrenze die Prägeeinrichtung 1 stillsetzen. Sie kann des Weiteren rechtzeitig oder spätestens bei Fehlproduktion zum Auswechseln des Mikroprägestempels 5 auffordern.

Erfindungsgemäß wird zum prägetechnischen Erzeugen von beugungsoptisch wirksamen Strukturen auf Oberflächen von Metallgegenständen, insbesondere Münzen, ein Prägewerkzeug vorgeschlagen, das einen Stempelkörper 6 mit einer an seiner wirksamen Fläche vorgesehenen Hartstoffschicht 8 aufweist. In die Hartstoffschicht ist das Negativrelief eines Beugungsgitters eingearbeitet. Dies erfolgt vorzugsweise durch Ablation, wobei die Relieftiefe geringer ist als die Schichtdicke. Zum Erhalt der Funktionsfähigkeit des Mikroprägestempels 5 über einen langen Zeitraum ist eine Reinigungseinrichtung vorgesehen, die vorzugsweise mit Trockeneisstrahlen 12, 13 arbeitet. Die produktionsbegleitende Kontrolle der Qualität des abgeprägten Diffraktogramms übernimmt ein optischer Sensor.

### Bezugszeichenliste

- 1: Prägeeinrichtung
- 2: Stempel
- 3: Stempel
- 4: Prägering
- 5: Mikroprägestempel
- 6: Stempelkörper 6a Stützstift
- 7: Stirnfläche
- 8: Hartstoffschicht
- 9: Prägerelief
- 10: Kante
- 11: Reinigungseinrichtung
- 12: Trockeneisstrahl
- 13: Trockeneisstrahl
- 14: Greifereinrichtung
- 15: Greiferzungen
- 16: Bürste
- 17: Sensor
- 18: Objektiv
- 19: Steuereinrichtung

## Patentansprüche

1. Prägeeinrichtung (1) zur Bearbeitung von Gegenständen, insbesondere Metallgegenständen, insbesondere Münzen,
mit einem Prägestempel (2), der ein Bildrelief aufweist und in den ein Mikroprägestempel (5) eingesetzt ist,
wobei der Mikroprägestempel (5) einen Stempelkörper (6) mit einer zumindest an einer dem Gegenstand zugewandten Seite (7) aufgebrachten Hartstoffschicht (8) aufweist, die ein in der Hartstoffschicht (8) auf dem Stempelkörper (6) erzeugtes Prägerelief (9) zur Erzeugung beugungsaktiver Prägestellen an dem Gegenstand aufweist,
und mit einer Reinigungseinrichtung (12, 13) zur Reinigung des Mikroprägestempels (5).

2. Prägeeinrichtung nach Anspruch 1, **dadurch gekennzeichnet, dass** der Stempelkörper (6) aus einem hochfesten harten Trägermaterial, vorzugsweise Hartmetall besteht.

3. Prägeeinrichtung nach Anspruch 1, **dadurch gekennzeichnet, dass** der Mikroprägestempel (5) an seiner dem Werkstück zugewandten Seite abgerundete Kanten (10) aufweist.

4. Prägeeinrichtung nach Anspruch 1, **dadurch gekennzeichnet, dass** die Relieftiefe des Mikroprägestempels geringer als die Schichtdicke der Hartstoffschicht (8) ist.

5. Prägeeinrichtung nach Anspruch 1, **dadurch gekennzeichnet, dass** die Hartstoffschicht (8) auf eine unprofilierte, vorzugsweise ebene Fläche (7) des Stempelkörpers (6) aufgebracht ist.

6. Prägeeinrichtung nach Anspruch 1, **dadurch gekennzeichnet, dass** die Hartstoffschicht (8) auf eine profilierte Fläche (7) des Stempelkörpers (6) aufgebracht ist.

7. Prägeeinrichtung nach Anspruch 1, **dadurch gekennzeichnet, dass** die Hartstoffschicht (8) durch ein plasma-aktiviertes CVD-Verfahren auf den Stempelkörper (6) aufgebracht ist.

8. Prägeeinrichtung nach Anspruch 1, **dadurch gekennzeichnet, dass** die Hartstoffschicht (8) eine auf den Stempelkörper (6) aufgebrachte DLC-Schicht ist.

9. Prägeeinrichtung nach Anspruch 1, **dadurch gekennzeichnet, dass** das Prägerelief (9) in die Hartstoffschicht (8) durch Laser-Ablation eingebracht ist.

10. Prägeeinrichtung nach Anspruch 1, **dadurch gekennzeichnet, dass** der Mikroprägestempel (5) in dem Prägestempel (2) herausnehmbar gehalten ist.

11. Prägeeinrichtung nach Anspruch 1, **dadurch gekennzeichnet, dass** die Reinigungseinrichtung eine Partikelstrahlreinigungseinrichtung ist.

12. Prägeeinrichtung nach Anspruch 11, **dadurch gekennzeichnet, dass** die Reinigungseinrichtung Blasdüsen aufweist, mittels derer ein Partikelstrahl auf das Prägerelief (9) des Mikroprägestempels (5) gerichtet werden kann.

13. Prägeeinrichtung nach Anspruch 11, **dadurch gekennzeichnet, dass** die Reinigungseinrichtung Blasdüsen aufweist, die dazu eingerichtet sind, einen Partikelstrahl vor dem Prägevorgang auf das Werkstück zu richten.

14. Prägeeinrichtung nach Anspruch 1, **dadurch gekennzeichnet, dass** die Reinigungseinrichtung eine Bürste (16) aufweist, die dazu eingerichtet ist bei offenem Werkzeug über das Prägerelief (9) zu streichen.

15. Prägeeinrichtung nach Anspruch 1, **dadurch gekennzeichnet, dass** ein optischer Sensor (17) vorgesehen ist, mittels dessen eine Steuereinrichtung (19) die Produktionsqualität überwacht.

16. Verfahren zur Herstellung eines Prägewerkzeugs zur Bearbeitung von Gegenständen, insbesondere Metallgegenständen, insbesondere Münzen, mit folgenden Schritten:
- Bereitstellen eines Stempelkörpers (6) eines Mikroprägestempels (5) mit einer im Wesentlichen glatten Fläche (7),
- Aufbringen einer Hartstoffschicht (8) auf die Fläche (7),
- Profilieren der Hartstoffschicht (8) mit einem Ablationsverfahren, wodurch ein Prägerelief (9) zur Erzeugung beugungsaktiver Prägestellen an dem Gegenstand in der Hartstoffschicht (8) erzeugt wird,
- Einsetzen des Mikroprägestempels (5) in einen Prägestempel (2) und Sichern des Mikroprägestempels (5) in diesem.

17. Verfahren nach Anspruch 16, **dadurch gekennzeichnet, dass** die Hartstoffschicht in einem PVD-Verfahren, einem CVD-Verfahren oder einer Kombination dieser Verfahren auf den Stempelkörper (6) aufgebracht ist.

18. Verfahren nach Anspruch 16, **dadurch gekennzeichnet, dass** das Ablationsverfahren ein Laser-Ablationsverfahren ist.

19. Verfahren nach Anspruch 16, **dadurch gekennzeichnet, dass** das Ablationsverfahren ein Ätzverfahren ist.

## Claims

1. Stamping device (1) for machining objects, in particular metal objects, in particular coins,
with a coining die (2), which has an image relief and into which a micro-stamping die (5) is set,
wherein the micro-stamping die (5) has a die body (6) with a hard material layer (8), which is applied at least to one side (7) facing the object and which has a stamping relief (9) generated in the hard material layer (8) on the die body (6) to generate diffraction-active stamping areas on the object,
and with a cleaning device (12, 13) for cleaning the micro-stamping die (5).

2. Stamping device according to claim 1, **characterised in that** the die body (6) is composed of a high-strength hard support material, preferably hard metal.

3. Stamping device according to claim 1, **characterised in that** the micro-stamping die (5) has rounded edges (10) on its side facing the workpiece.

4. Stamping device according to claim 1, **characterised in that** the relief depth of the micro-stamping die is less than the layer thickness of the hard material layer (8).

5. Stamping device according to claim 1, **characterised in that** the hard material layer (8) is applied to a non-contoured, preferably plane, face (7) of the die body (6).

6. Stamping device according to claim 1, **characterised in that** the hard material layer (8) is applied to a contoured face (7) of the die body (6).

7. Stamping device according to claim 1, **characterised in that** the hard material layer (8) is applied to the die body (6) by a plasma-activated CVD process.

8. Stamping device according to claim 1, **characterised in that** the hard material layer (8) is a DLC layer applied to the die body (6).

9. Stamping device according to claim 1, **characterised in that** the stamping relief (9) is applied into the hard material layer (8) by laser ablation.

10. Stamping device according to claim 1, **characterised in that** the micro-stamping die (5) is removably held in the coining die (2).

11. Stamping device according to claim 1, **characterised in that** the cleaning device is a particle spray cleaning device.

12. Stamping device according to claim 11, **characterised in that** the cleaning device has blast nozzles, by means of which a particle spray can be directed onto the stamping relief (9) of the micro-stamping die (5).

13. Stamping device according to claim 11, **characterised in that** the cleaning device has blast nozzles, which are arranged to direct a particle spray onto the workpiece before the stamping operation.

14. Stamping device according to claim 1, **characterised in that** the cleaning device has a brush (15), which is arranged to brush over the stamping relief (9) when the tool is open.

15. Stamping device according to claim 1, **characterised in that** an optical sensor (17) is provided, by means of which a control device (19) monitors the production quality.

16. Process for producing a stamping tool for machining objects, in particular metal objects, in particular coins, with the following steps:
• providing a die body (6) of a micro-stamping die (5) with a substantially smooth face (7),
• applying a hard material layer (8) to the face (7),
• contouring the hard material layer (8) with an ablation process, by means of which a stamping relief (9) is generated in the hard material layer (8) to generate diffraction-active stamping areas on the object,
• inserting the micro-stamping die (5) into a coining die (2) and securing the micro-stamping die (5) therein.

17. Process according to claim 16, **characterised in that** the hard material layer is applied to the die body (6) in a PVD process, a CVD process or a combination of these processes.

18. Process according to claim 16, **characterised in that** the ablation process is a laser ablation process.

19. Process according to claim 16, **characterised in that** the ablation process is an etching process.

## Revendications

1. Dispositif d'estampage (1) pour façonner des objets, en particulier des objets métalliques, en particulier des pièces de monnaie,
comprenant un poinçon d'estampage (2) qui présente un relief d'image et dans lequel est inséré un micro-poinçon d'estampage (5),
le micro-poinçon d'estampage (5) comportant un corps de poinçon (6) doté d'une couche de matière dure (8), laquelle est appliquée au moins d'un côté (7) tourné vers l'objet et présente un relief d'estampage (9) produit dans la couche de matière dure (8) sur le corps de poinçon (6) pour produire, sur l'objet, des points d'estampage actifs en diffraction,
et comportant un dispositif de nettoyage (12, 13) pour nettoyer le micro-poinçon d'estampage (5).

2. Dispositif d'estampage selon la revendication 1, **caractérisé en ce que** le corps de poinçon (6) est constitué d'un matériau de support de grande dureté, de préférence d'un métal dur.

3. Dispositif d'estampage selon la revendication 1, **caractérisé en ce que**, sur son côté tourné vers la pièce, le micro-poinçon d'estampage (5) comporte des bords arrondis (10).

4. Dispositif d'estampage selon la revendication 1, **caractérisé en ce que** la profondeur de relief du micro-poinçon d'estampage est plus faible que l'épaisseur de couche de la couche de matière dure (8).

5. Dispositif d'estampage selon la revendication 1, **caractérisé en ce que** la couche de matière dure (8) est appliquée sur une surface (7) non profilée, de préférence plane, du corps de poinçon (6).

6. Dispositif d'estampage selon la revendication 1, **caractérisé en ce que** la couche de matière dure (8) est appliquée sur une surface (7) profilée du corps de poinçon (6).

7. Dispositif d'estampage selon la revendication 1, **caractérisé en ce que** la couche de matière dure (8) est appliquée sur le corps de poinçon (6) par un procédé CVD activé par plasma.

8. Dispositif d'estampage selon la revendication 1, **caractérisé en ce que** la couche de matière dure (8) est une couche DLC appliquée sur le corps de poinçon (6).

9. Dispositif d'estampage selon la revendication 1, **caractérisé en ce que** le relief d'estampage (9) est réalisé dans la couche de matière dure (8) par ablation laser.

10. Dispositif d'estampage selon la revendication 1, **caractérisé en ce que** le micro-poinçon d'estampage (5) est maintenu dans le poinçon d'estampage (2) de manière amovible.

11. Dispositif d'estampage selon la revendication 1, **caractérisé en ce que** le dispositif de nettoyage est un dispositif de nettoyage par jet de particules.

12. Dispositif d'estampage selon la revendication 11, **caractérisé en ce que** le dispositif de nettoyage comporte des buses de soufflage permettant de diriger un jet de particules sur le relief d'estampage (9) du micro-poinçon d'estampage (5).

13. Dispositif d'estampage selon la revendication 11, **caractérisé en ce que** le dispositif de nettoyage comporte des buses de soufflage conçues pour diriger un jet de particules sur la pièce avant le processus d'estampage.

14. Dispositif d'estampage selon la revendication 1, **caractérisé en ce que** le dispositif de nettoyage comporte une brosse (16) conçue pour passer sur le relief d'estampage (9) lorsque l'outil est ouvert.

15. Dispositif d'estampage selon la revendication 1, **caractérisé en ce qu'**il est prévu un capteur optique (17) permettant à un dispositif de commande (19) de surveiller la qualité de production.

16. Procédé de fabrication d'un outil d'estampage pour façonner des objets, en particulier des objets métalliques, en particulier des pièces de monnaie, comprenant les étapes suivantes :
- mise à disposition d'un corps de poinçon (6) d'un micro-poinçon d'estampage (5) doté d'une surface (7) sensiblement plane,
- application d'une couche de matière dure (8) sur la surface (7),
- profilage de la couche de matière dure (8) avec un procédé d'ablation, par lequel un relief d'estampage (9) pour produire, sur l'objet, des points d'estampage actifs en diffraction est produit dans la couche de matière dure (8),
- insertion du micro-poinçon d'estampage (5) dans un poinçon d'estampage (2) et blocage du micro-poinçon d'estampage (5) dans celui-ci.

17. Procédé selon la revendication 16, **caractérisé en ce que** la couche de matière dure est appliquée sur le corps de poinçon (6) par un procédé PVD, un procédé CVD ou une combinaison de ceux-ci.

18. Procédé selon la revendication 16, **caractérisé en ce que** le procédé d'ablation est un procédé d'ablation laser.

19. Procédé selon la revendication 16, **caractérisé en ce que** le procédé d'ablation est un procédé de gravure.
